# EUROPEAN PATENT APPLICATION

(11) **EP 4 197 629 A1**
(43) Date of publication of application: **21.06.2023**
(21) Application number: 21215895.0
(22) Date of filing: 20.12.2021
(51) Int. Cl.: B01J 20/12, B09B 3/00, C11B 1/04, C11B 13/04

(54) **RESIDUE EXTRACTION FROM A SORBENT VIA (TRANS-)ESTERIFICATION**

(71) Applicant: VITO NV, 2400 Mol (BE)
(72) Inventor: Vanlerberghe, Brecht, 2400 Mol (BE); Elst, Kathy, 2400 Mol (BE); Corderi Gandara, Sandra, 2400 Mol (BE)
(74) Representative: Arnold & Siedsma

(57) **Abstract**

The present invention relates to a method for reducing the amount of one or more of a residue, such as a fat residue or oil residue, entrapped in a spent sorbent. The present invention further pertains to the sorbent obtained by the present method.

## Description

### FIELD OF THE INVENTION

The present invention relates to a method for reducing the amount of one or more of a residue, such as a fat residue or an oil residue, entrapped in a spent sorbent. The present invention further pertains to the sorbent obtained by the present method.

### BACKGROUND TO THE INVENTION

The oil refining industry make use of sorbent, especially bleaching earths, for the bleaching of oil. The bleaching process is of high importance, as it removes undesirable substances from said oil, such as soap residues, traces of heavy metals, pesticide residues and residues of phosphorus compounds etc. apart from its main purpose of removal of coloring matter like carotenoids and chlorophyll pigments. The bleaching process produces large amounts of spent sorbent, such as spent bleaching earth (SBE, or UBE for Used Bleaching Earth), which is usually treated as a waste product. SBE is mostly deposited as waste worldwide. It is estimated that annually at least 100,000 MT of fats/oils are ditched in the form of SBE. SBE usually contains high amounts of entrapped crude oil, making disposal of SBE an environmental hazard. The constant change in environmental legislation and the growing importance of safety in the disposal techniques has led to many restrictions in solid waste management. The disposal of spent bleaching clay from the vegetable oil processing industry is a problem of growing importance. The earlier research on SBE reclamation focused on the oil left, as the SBE itself was not regenerated for reuse. Disposal of SBE by incineration, inclusion in animal feeds, land filling methods, or concrete etc. is generally practiced. These solutions are less than ideal. The reuse of SBE is a great opportunity for cost saving in the oil processing industry.

CN104450206 discloses a process for recovering vegetable oil from SBE. The process described in CN104450206 comprises the following steps: 1) SBE oil extraction; 2) solvent and oil recovery; 3) oil pre-esterification; 4) oil transesterification; 5) ethyl ester/glycerinum separation; and 6) ethyl ester purification. CN104450206 discloses a first step of solvent extracting oil from the SBE, using hexane. Subsequently, the oil is trans-esterified for better separation and recycling. After the extraction treatment, the SBE with a reduced oil content is mixed with soybean powder, for it to be used as animal feed. The method discloses in CN104450206 has disadvantages. In particular, the method for removing vegetable oil from SBE described in CN104450206 employs both sulfuric acid and a basic catalyst in its process, it is labor intensive, requiring multiple steps.

It is therefore industrially important to investigate ways to regenerate spent sorbents, such as SBE, and possibly recover oil entrapped therein.

### SUMMARY OF THE INVENTION

In a first aspect, the present invention relates to a method for reducing the amount of a residue, such as a vegetable fat residue or an oil residue, in a spent sorbent, such as a spent bleaching earth, the method comprising the steps of:
a) drying a spent sorbent containing the residue, thereby obtaining a dried spent sorbent;
b) subjecting the residue entrapped in the dried spent sorbent obtained from step a) to a (trans-)esterification reaction by contacting the dried spent sorbent with at least one alcohol, thereby obtaining form the (trans-)esterification one or more esters from said residue entrapped in the dried spent sorbent;
c) removing the one or more esters obtained via the (trans-)esterification reaction of step b), thereby obtaining a sorbent comprising an amount of the residue which is lower than the amount of residue entrapped in the spent sorbent initially provided.

An advantage of the present invention is that higher extraction yields of residues from sorbents can be obtained. In particular, the method according to the present invention allows for the extraction of higher amounts of residue entrapped in the sorbent, compared to the state of the art. The present method has been found particularly useful in allowing extraction of fat residues or oil residues, but also of pigments an inorganic materials such as sulfuric acid derived compounds, phosphonic acid derived compounds and nitric acid derived compounds, from spent bleaching earth. Further, the method of the present invention is beneficial in that it requires less steps compared to state of the art methods, as by means of the present invention the (trans-)esterification may be conducted in-situ, on spent sorbent comprising the residue. Further, the method of the present invention does not require a catalyst, e.g. an acid catalyst, to be present during the (trans-)esterification of the residue, this being beneficial in saving material costs. Nevertheless, a catalyst may be added to further increase the (trans)-esterification reaction yield. Therefore, the method according to the present invention allows for a residue to be removed from a sorbent, such as a bleaching earth. By removing said residue form the sorbent, the sorbent can be further used e.g. for its sorbing function, as a filler or food supplement, or be safely disposed as inorganic waste. The removed esterified residue can further be processed e.g. regenerated, or used in the manufacturing of biodiesel.

According to an embodiment of the present invention, at step a) the spent sorbent, which comprises the residue, is dried at a temperature from 50°C to 150°C. An advantage of the present embodiment of the invention is that the risk to degradation of the fat residue or an oil residues and the formation of unwanted byproducts can be minimized. According to a further embodiment of the present invention, at step a) the spent sorbent, which comprises the residue, is dried at a temperature from 80°C to 120°C.

According to an embodiment of the present invention, the method further comprises:
d) subjecting the sorbent obtained from step c), which comprises a lower amount of residue than the one used in step a), to a further (trans-)esterification step b) as defined by the present disclosure.

An advantage of the present embodiment of the invention is that the yield of (trans)esterified product may be increased, that residue that more firmly entrapped in the spent sorbent can be (trans)esterified as well and be recovered, which results in higher amounts of residue being extracted .

According to a preferred embodiment, step d) further comprises drying the spent sorbent prior to subjecting said sorbent to the further (trans-)esterification step b). By removing water a higher reaction rate may be achieved and the risk to unwanted hydrolysis of the esters formed in step b) - which could give rise to the formation of compounds which are more strongly adsorbed in the sorbent - may be minimized.

According to an embodiment of the present invention, the alcohol used in step b) is preferably selected from one or more of methanol, ethanol, propanol, butanol. These alcohols are relatively small molecules which are better capable of penetrating the sorbent and its porous structure and give rise to the formation of smaller molecules which can more easily leave the sorbent, when compared to higher alcohols such as C10 alcohol or higher, and they have a higher reactivity in the esterification reaction. Preferably, use is made of methanol.

According to an embodiment of the present invention, step b) of subjecting the residue entrapped in the dried spent sorbent to a (trans-)esterification reaction is conducted at a temperature greaterthan 200°C. By carrying out esterification at a temperature above the boiling point of the alcohol, mobility of the alcohol can be improved and a higher reaction rate may be achieved. According to an embodiment of the present invention, step b) is conducted at a temperature from 200°C to 300°C

According to a further preferred embodiment of the present invention, step b) is performed under over-pressure, which means that step b) is carried out at a pressure above atmospheric pressure. Carrying out step b) under elevated pressure, above atmospheric pressure. may accelerate the (trans)esterification reaction and facilitate esterification of residues which otherwise would be less reactive in a (trans)esterification reaction. At these conditions contact of the alcohol and the residue entrapped in the spent sorbent may be improved, thereby increasing the yield of (trans)esterified product and often also the reaction rate. According to a further embodiment of the invention, the pressure and temperature are preferably selected from those allowing the solvent to be in a liquid phase.

In a preferred embodiment of the present invention, step b) is conducted with a reaction mixture consisting of the at least one alcohol and the dried spent sorbent. Ad advantageously the use of a catalyst can be dispensed with.

According to yet a further preferred embodiment of the present invention, at step b) the dried sorbent and the alcohol are provided in a solid to liquid ratio expressed in g/ml of from 0.01 to 60, preferably from 0.02 to 5, more preferably from 0.025 to 4. An advantage of this preferred embodiment is that the amount of solvent used may be minimized, an optimal conversion of the residue may be obtained and optimal recovery of the (trans)esterified product from the spent sorbent.

In a second aspect, the present invention relates to a regenerated sorbent obtained by the method according to the present invention, which is suitable for being recycled to the process from which it originates.

### DETAILED DESCRIPTION OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. When describing the compounds of the invention, the terms used are to be construed in accordance with the following definitions, unless a context dictates otherwise.

The term "about" or "approximately" as used herein when referring to a measurable value such as a parameter, an amount, a temporal duration, and the like, is meant to encompass variations of +/- 10 % or less, preferably +/- 5 % or less, more preferably +/- 1 % or less, and still more preferably +/- 0.1 % or less of and from the specified value, insofar such variations are appropriate to perform in the disclosed invention. It is to be understood that the value to which the modifier "about" or "approximately" refers is itself also specifically, and preferably, disclosed.

In a first aspect, the present invention relates to a method for reducing the amount of a residue entrapped in a spent sorbent. The present invention also relates to a method for recovering at least part of a residue entrapped in a spent sorbent. The invention further relates to a method for converting at least part of a residue entrapped in a spent sorbent into one or more compounds that may be recovered.

In accordance with the present invention, by means of the term "residue", reference is made to one or more substances entrapped in a sorbent after said sorbent has been used a sorption agent in a process with the purpose of removing unwanted components from the process mixture. For example, reference is made to substances which have been removed by said sorbent during the refining of a liquid matter, such as a fat or oil, for example a vegetable fat or oil, or compounds comprising an inorganic acid such as sulfuric acid, phosphonic acid, nitric acid. Such compounds may get trapped in the sorbent when the liquid matter is contacted with the sorbent for the purpose of removing unwanted compounds such as coloring matter like carotenoids and chlorophyll pigments from said vegetable oil. These components then get trapped into said sorbent, and unfortunately part of desired components such as the fats or oils are entrapped in the sorbent as well. Since these fats and oils and compounds comprising inorganic acids such as those listed above, represent a high value in the process, it is desirable to minimize losses, and to find a process with which they can be recovered from the spent sorbent.

In accordance with the present invention, by means of the term "fat residue or an oil residue", reference is made to a residue comprising free organic acids, such as free fatty acids, or esters such as fatty acid esters, such as esters of a fatty acid and glycerol (glycerol fatty acid ester or fatty acid glyceride). There are no particular limitations on the fat residue or the oil residue of the present invention, examples of fat residues or oil residues include oils compressed and extracted from plant-based raw materials such as soybeans, sesame seeds, rapeseed, safflower, sunflower and corn, and oils or fats extracted from animal-based raw materials such as fish and livestock meat. Among these, the fat residue or oil residue which the present invention seeks to recover from the spent sorbent is preferably a vegetable oil extracted from a plant-based raw material.

In the present invention, by means of the term "sorbent" reference is made to a substance which has the property of collecting molecules of another substance by sorption. Examples of sorbents are, and not limited to, porous media, for example activated carbon, clay minerals, for example kaolin earth, bleaching earth, zeolites, diatomaceous earth or combinations thereof. In a preferred embodiment the sorbent contains bleaching earth. Bleaching earths are generally composed of up to three types of clay minerals, for example bentonite, attapulgite and sepiolite, or a combination of montmorillonite, attapulgite, and sepiolite. Clay minerals such as dickite, silica, ilmenite, and merlinite may also be present. It shall be clear that the nature of the bleaching earth may depend on the nature of the process in which it has been used. Bleaching earths may also comprise mineral acid treated clay minerals, from which basic components have been eluted such as aluminum, iron and magnesium. The clay minerals are capable of acting as absorbers with capacity being dependent on mineralogical structure and properties, such as surface area, particle size distribution, porosity and surface activity. Bleaching earths according to the present invention are suitable to sorb one or more impurities, such as coloring substances, from a liquid, such as an oil e.g., a vegetable oil. Bleaching earth is used in the refining of vegetable oils and animal fats for human consumption. The absorbent capacity of the bleaching earth removes the impurities and unwanted matter, such as coloring substances (carotenoids), soaps, proteins and others, found in oils and fats.

The sorbent may be used in the form of a powder, comprising particles. If so desired the sorbent or spent sorbent may be subjected to grinding in advance of subjecting it to the (trans)esterification reaction, to achieve de-agglomeration of particles that have agglomerated and improve accessibility of the residue contained therein.

In accordance with the present invention, by means of the term "spent sorbent", reference is made to a sorbent that has been used in a process for refining a compound, such as a fat or an oil, and thereby contains an amount of said compound entrapped therein. In case of fat or oil, there are no particular limitations on the oil or fat refining method, and a similar method to that described below for the method for producing a refined oil or fat can be used. In a preferred embodiment of the present invention, the spent sorbent is a spent bleaching earth. It shall be clear that the term "spent sorbent" may also refer to a sorbent that has been used in other types of process,

In accordance with the present invention, by means of the term "spent bleaching earth", reference is made to a bleaching earth that has been used in refining of a process stream, for example refining of oil or fat, including vegetable and animal oils and fats. There are no particular limitations on the oil or fat refining method, and a similar method to that described below for the method for producing a refined oil or fat can be used.

Further, the method according to the present invention comprises step a) of drying a spent sorbent, thereby obtaining a dried spent sorbent. In accordance with the present step a), a spent sorbent is therefore dried.

The spent sorbent provided at step a) for drying can have been obtained from the refining of oil or fat according to various techniques, and there is no particular limitation on the refining method used. The spent sorbent provided at step a) for drying has been preferably subjected to cutting or grinding or the like in advance (prior to drying) for the purposes of achieving homogeneity e.g. to minimize agglomeration to achieve a larger surface area,

It has been found of particular importance to perform the present step a) as it has been observed that using a spent sorbent which has been subjected to a drying step provides for better (trans-)esterification yields. The present step is particularly important for reducing the water content that might be present within the spent sorbent. Several methods are applicable to dry the spent sorbent. Suitable drying methods comprise heat drying, wherein a source of heat is used to evaporate liquids, such as water, from the spent sorbent. When the drying method is performed via heat drying, the spent sorbent is for example expose to the proximity of a heater or heat exchanger or the like, or it is dried by means of a stream of hot air, at a reduced pressure or in the presence of a desiccant, or freeze dried. Further, the spent sorbent according to the present step can also be dried via natural drying methods. In accordance with a preferred embodiment, the spent sorbent is heat dried.

In particular, according to an embodiment of the present invention, at step a) the spent sorbent is dried at a temperature from 50°C to 150°C. Heat drying the spent sorbent at this temperature range has been found particularly beneficial in assuring an efficient removal of water from the spent sorbent while minimizing the occurrence of decomposition reaction, which can negatively affect the sorbed residues. In a particularly beneficial embodiment of the present invention, at step a) the spent sorbent is heat dried at a temperature from 80°C to 120°C.

Further, the method according to the present invention further comprises the step b) of subjecting the residue entrapped in the dried spent sorbent obtained from step a) to a (trans-)esterification reaction by contacting the dried spent sorbent with at least one alcohol, thereby obtaining one or more esters from said residue. Therefore, by means of the present step, also referred to as (trans-)esterification step, the residues that have been sorbed in the dried spent sorbent and are present therein are (trans-)esterified. In order to provide for the (trans-)esterification of the residues, the dried spent sorbent containing said residues is contacted with an alcohol, preferably a lower alcohol. According to a preferred embodiment of the present invention, step b) comprises providing a lower alcohol. The present step consists of an "in-situ" (trans-)esterification reaction wherein rather than for example extracting with a solvent the residue from the spent sorbent, and then (trans-)esterified the obtained extract, the (trans-)esterification reaction is performed directly onto the residue entrapped in the spent sorbent, by contacting the sorbent comprising the residue with an alcohol at (trans-)esterification conditions. This in-situ (trans-)esterification allows to save both time and materials (e.g., solvent). In the context of the present invention, the (trans-)esterification reaction is accomplished on a fat residue or oil residue entrapped in a sorbent.

In accordance with the present invention, by means of the term "alcohol", reference is made to any organic compound whose molecule contains one or more hydroxyl groups attached to a carbon atom. The alcohol according to the present invention may be linear or branched, and may be either monohydric, or dihydric or greater. Possible alcohols which can be used in the (trans-)esterification reaction of the present invention include, and are not limited to, linear monohydric alcohols such as methanol, ethanol, 1-propanol, 1-butanol, 1-pentanol and 1-hexanol, and branched monohydric alcohols such as 2-propanol and 2-butanol. Dihydric alcohols which can be used in the context of the present invention, include ethylene diol, propene diol, butene diol. Trihydric alcohols such as glycerol can also be used.

Among these, the lower alcohol in the present invention is preferably a monohydric alcohol. The lower alcohol in the present invention is preferably linear, and the carbon number is preferably at least 1 but not more than 8, more preferably at least 1 but not more than 6, and still more preferably at least 1 but not more than 4. Specifically, this type of lower alcohol is preferably methanol, ethanol, 1-propanol, butanol and mixtures thereof, more preferably methanol. The alcohol used in the present invention is preferably high purity alcohol, such as, >99 %wt methanol, nevertheless, the alcohol according to the present invention can also be a lower purity alcohol.

In accordance with the present invention, by means of the term "ester", reference is made to any organic compound comprising one or more groups derived from a carboxylic acid in which at least one -OH hydroxyl group is replaced by an -O- alkyl (alkoxy) group, as in the substitution reaction of a carboxylic acid and an alcohol.

In accordance with the present invention, by means of the term "(trans-)esterifying", reference is made to the act of conducting a trans-esterification reaction, or an esterification reaction, depending on the one or more residual compounds present in the dried spent sorbent. For example, in case the residual compound is a free fatty acid (hence the compound does not comprise an ester moiety, but carboxylic acid moiety), it is clear that the reaction would be an esterification reaction, whereas if the residual compound is triglyceride (hence the compound comprises an ester moiety), the reaction would be a trans-esterification reaction.

In accordance with the present invention, by means of the term "lower alcohol", reference is made a linear or branched alcohol with a carbon number of at least 1 but not more than 11. In the present invention, a single type of lower alcohol may be used alone, or a mixture of two or more types of lower alcohol may be used. The lower alcohol may be linear or branched, and may be either monohydric, or dihydric or greater. Examples include linear monohydric alcohols such as methanol, ethanol, 1-propanol, 1-butanol, 1-pentanol and 1-hexanol, and branched monohydric alcohols such as 2-propanol and 2-butanol. According to preferred embodiment of the present invention, the alcohol used in step b) comprises one or more alcohols for conducting said (trans-)esterification selected from the list of: methanol, ethanol, propanol, butanol, preferably methanol. According to a preferred embodiment of the present invention, the alcohol is methanol. An advantage of the present embodiment is that the spent sorbent can be better penetrated, and has high polarity, threby providing stronger intermolecular interactions facilitating the (trans-)esterification.

According to an embodiment of the present invention, wherein step b) is conducted at a temperature greater than 200°C. An advantage of the present embodiment of the invention is that high conversion yields can be obtained, even in the absence of a (trans-)esterification catalyst. According to a further embodiment of the present invention, step b) is conducted at a temperature from 200°C to 300°C. An advantage of the present embodiment of the invention is that high conversion yields can be obtained, whilst minimizing the occurrence of unwanted side-reactions e.g., decomposition reactions.

According to a preferred embodiment of the present invention, at step b) the dried spent sorbent is subjected to a (trans-)esterification reaction under agitation. Agitating the reaction mixture comprising the dried spent sorbent and the alcohol allows to achieve better contact between the reactants, thereby providing a more efficient transformation.

According to a further, preferred, embodiment of the present invention, step b) is performed under overpressure, i.e. a pressure above atmospheric pressure. An advantage of the present embodiment is that it allows for the obtainment of satisfactory yields even without using a (trans-)esterification catalyst. Carrying out step b) under elevated pressure, above atmospheric pressure, may accelerate the (trans)esterification reaction and facilitate esterification of residues which otherwise would be less reactive in a (trans)esterification reaction. At these conditions contact of the alcohol and the residue entrapped in the spent sorbent may be improved, thereby increasing the yield of (trans)esterified product and often also the reaction rate. In particular, according to a preferred embodiment of the present invention, it has been found advantageous to perform the (trans-)esterification reaction at a pressure above the vapor pressure of the reaction medium e.g., the alcohol, at a specific temperature, but below the critical temperature, or above the critical pressure (but below the critical temperature), thereby allowing the reaction medium to be in a liquid phase even under elevated pressure, above atmospheric pressure. For example, in case methanol is used in the (trans-)esterification reaction, it has been found advantageous to conducted said transesterification a pressure of 50-55 bars at 230 °C, and at a pressure of 100-110 bars at 270 °C. When the step b) of subjecting the residue to a (trans-)esterification reaction is performed at elevated pressure, above atmospheric pressure, the sorbent comprising residue and the alcohol are placed inside a pressurized reactor for said (trans-)esterification reaction to occur.

The (trans-)esterification reaction of step b) can be conducted in the presence of one or more other components, such as and not limited to: catalysts, co-catalysts, additives and further solvents. When a catalyst is used, an acidic catalyst is preferred. In accordance with the present invention, there are no particular limitations on the acidic catalyst, provided it is a catalyst capable of favorably promoting the (trans-)esterification reaction. The acidic catalyst used in the present invention may be an acid catalyst or an acidic solid catalyst.

By means of the term "acid catalyst" reference is made to a catalyst which promotes an acid catalytic reaction. Specific examples of acid catalysts include inorganic acids such as sulfuric acid, hydrochloric acid and nitric acid, and organic acids such as phosphoric acid and sulfonic acids. Further, an "acidic solid catalyst" means a solid catalyst which promotes an acid catalytic reaction. Specific examples of acidic solid catalysts include solid acid catalysts such as ion exchange resins, zeolites and silicon dioxide complexes.

In the present invention, a single type of acidic catalyst may be used, or an appropriate combination of two or more types of acid catalyst may be used. Among the various possibilities, the catalyst in the present embodiment is preferably an acid catalyst, more preferably sulfuric acid, sulfonic acid, a mixture of sulfuric acid and sulfonic acid, or a combination of one of these with another acid catalyst, and from the viewpoint of economic viability, is most preferably sulfuric acid.

Further, in the method according to the present invention, other components may also be present during the (trans-)esterification reaction. There are no particular limitations on these other components, provided they are components which do not impair the extraction of the fat or oil form the dried spent sorbent and the (trans-)esterification reaction. Examples of such components include co-catalysts and solvents. Examples of the co-catalysts include thionyl chloride, sodium citrate, dimethyl acetal, and metal catalysts and salts thereof. Examples of the metal catalysts include zinc, aluminum and tin.

Nevertheless, the method according to the present invention provides for good fat or oil removal from spent sorbents even in the absence of (trans-)esterification catalysts, such as acidic catalysts, such as sulfuric acid. This is advantageous as it allows to preserve resources and to minimize risks associated with the handling of catalysts e.g., sulfuric acid, and their disposal. According to a further embodiment of the present invention, step b) is conducted with a reaction mixture consisting of the alcohol and the dried spent sorbent obtained at step a), and thereby in the absence of other components, e.g., catalysts. Therefore, advantageously the use of a catalyst can be dispensed with. This is beneficial in reducing the steps required to carry on the method of the invention and keep it as much environmentally friendly as possible, and saving in material costs. Further, by means of the present embodiment is possible to avoid the use of corrosive resistant reactor components.

According to yet a further embodiment of the present invention, at step b) the dried spent sorbent and the alcohol are provided in a solid to liquid ratio expressed in g/ml of from from 0.01 to 10, preferably from 0.02 to 5, more preferably from 0.025 to 4. An advantage of this preferred embodiment is that the amount of solvent used may be minimized, an optimal conversion of the residue may be obtained and optimal recovery of the (trans)esterified product from the spent sorbent.

Further, the method according to the present invention comprises a step c) of removing the one or more esters obtained at step b) from the sorbent, thereby obtaining a sorbent having a reduced amount of the residue. Therefore, in step c) of the method of the present invention, the esters formed during the (trans-)esterification step b) are separated from the sorbent. After the (trans-)esterification step, esters of the alcohol formed are at least in part solubilized in said alcohol. In case it is found favorable to accomplish the removal of the one or more esters from the sorbent, a further solvent e.g., another alcohol, can be used.

To recover the sorbent, the sorbent obtained at step c), which contains a reduced amount of the residue, can be separated from the alcohol used for the (trans-)esterification by means of different separation methods, such as filtration, decantation and centrifugation.

After one or more esters of the residue are separated from the sorbent, it is possible that unreacted residues and/or entrapped esters are still sorbed within the sorbent. In order to improve the efficiency of removal of the residue, it has been found beneficial to subject the sorbent having a reduced amount of the residue obtained at step c) to a further (trans-)esterification step b). By doing so, a larger amount of residues can be recovered from the sorbent in the form of esters. Therefore, according to an embodiment of the present invention, the method therefore further comprises the step d) of subjecting the sorbent having a reduced amount of the residue obtained at step c) to a further (trans-)esterification step b) as defined according to the present invention. An advantage of the present embodiment of the invention is that the yield of (trans)esterified product may be increased, that residue that more firmly entrapped in the spent sorbent can be (trans)esterified as well and be recovered, which results in higher amounts of residue being extracted.

Therefore, the separated sorbent can then be subjected to a further (trans-)esterification step b). This further step d) can be performed immediately after separation, or after having dried the sorbent. A drying step after the (trans-)esterification step b) is helpful in removing traces of alcohol or other solvents if used e.g., water, which presence might lead to lower yields. Therefore, according to an embodiment of the present invention, step d) further comprises drying the sorbent prior to subjecting the sorbent to the further (trans-)esterification step b). By removing water a higher reaction rate may be achieved and the risk to unwanted hydrolysis of the esters formed in step b) - which could give rise to the formation of compounds which are more strongly adsorbed in the sorbent - may be minimized.

The method of the present invention is preferably performed on a spent sorbent twice, nevertheless, the drying step and (trans-)esterification step cycle can be performed multiple times if so required.

In a second aspect, the present invention relates to a sorbent obtained by the method according to the present invention. The sorbent having a reduced amount of the residue obtained according to the method of the present invention can be advantageously re-used for example to sorb impurities in fats or oils in the chemical industry, such as in the biodiesel industry, or in the refining of edible vegetable oils and fats, specialty oils and fats such as fish oils and fish oil concentrates, typically Omega-3 fish oils such as eicosapentaenoic acid (EPA) or docosahexaenoic acid (DHA), or in any conventional applications for such sorbents. In a preferred embodiment, the reaction products, in particular esters, that have been recovered from the sorbent may be used as fertilizer or in their conventional applications.

### EXPERIMENTAL PART

### MATERIALS AND METHODS

### MATERIALS

Spent bleaching earth was provided from local industry. The bleaching earth was characterized on its moisture, organic matter (=OM) and ash content by determining its weight loss after oven treatment at respectively 105 and 550 °C. This material contains 27.3 % moisture, 25.4 % OM and 47.4 % ash (ratio organic matter/ash 0.536). The solvents, methanol and ethanol, were supplied from Sigma Aldrich.

### METHODS

### Pre-treatment of the spent bleaching earth

The spent bleaching earth was first homogenized. Then it was sieved under anaerobic conditions over a 3 mm sieve to reduce the big lumps and obtain a uniform material. The material was packed in smaller lots (~ 25 g) in bags under N₂ to avoid oxidation, and stored until use. For the different experiments, fresh bags were used. The spent bleaching earth obtained after pre-treatment is also referred to as "fresh bleaching earth".

### Overall mass balance

The overall mass balance was made on dry matter base. The amount of the starting spent bleaching earth, as weighed, was corrected for its moisture content to determine the dry matter content of the "in" fraction. After treatment, the remaining spent bleaching earth was separated from the extraction/reaction fluid, and both were assessed for their dry matter content after extensive drying under N₂. The dry weigh of the extracted bleaching earth as well as the extract were expressed relative to the dry "in" mass.

### Assessment based on spent bleaching earth

The extracted spent bleaching earth was characterized in the same way as the initial material; i.e., with first an oven treatment at 105 °C to determine the moisture/dry matter content, followed by an oven treatment at 550 °C to determine the (removed) organics and residual ash content.

All measurements were done in duplicate. For the dry matter and ash, the duplicates always had a relative difference of less than 1%. In case of the organic matter, which was typically the lowest value, the relative difference was in most cases less than 1%, occasionally reaching 3%. Since the various processes are based on different principles, and sometimes are applied on the fresh and sometimes on the pre-dried material, their comparison in terms of yield is not straightforward. For instance, due to the absence of the moisture, the organic matter content of the dried material is proportionally higherthan the one of the wet material (see **Error! Reference source not found.),** making a direct comparison in absolute terms difficult.

Forthis reason, it was decided to compare the processes based on the ratio between the organic matter and ash. As the inorganic ash is expected to remain unaffected by the processes, this ratio solely depends on the remaining organic matter independently of the moisture content. A ratio of 0.536 was taken equal to 100% of extractable organic material, and the yield was calculated relative to this value.

| Spent bleaching earth | Moisture (wt%) | OM (wt%) | Ash (wt%) | OM/Ash |
|---|---|---|---|---|
| Wet | 27,3 | 25,4 | 47,4 | 0,536 |
| Dried | - | 34,9 | 65,1 | 0,536 |

### Assessment based on the extracts

To obtain more information on the composition, the extracts were analyzed with several methods:
- Gravimetric yield of the extract relative to the initial mass (as such, without correction for moisture);
- Total content of glycerides and fatty acids in the extract with GC/FID. To determine the content, the extract was esterified/transesterified in a two-step approach, first under acidic and then under basic conditions to produce the corresponding fatty acid methyl esters (FAME). This method was chosen as it is known to be a very versatile method for a wide range of fatty acid/glyceride compositions. As internal standards, known amounts of C15:0 were added before esterification/transesterification. The FAMEs were measured with GC/FID and identified based on their known retention times (range C6-C24). They were quantified against a set of 6 standard solutions prepared from C12, C18:1 (100-20000 µg/g) and the internal standard that underwent the same procedure. From the difference in response factor between the fatty acids standards and the C17:0 methyl ester, an error less than 10% was expected. The results were expressed relative to the extract mass. All values are expressed on weigh basis relative to the dry extract (in wt%);
- The FAME content of the extract as such was also measured. To the extract a known amount of C17:0 methyl ester was added as an internal quality control. The individual FAMES were identified based on their known retention time and quantified against a set of standard solutions of C17:0 methyl ester. The results were expressed relative to the weight of the extract in wt%;
- The chlorophyll and total carotenoids were determined by a UV-VIS spectrophotometric method. A quantitative subsample of the extracts was suitably dissolved in 95% EtOH and measured in triplicate against a blanc solution at different wavelengths characteristic to the absorptions of chlorophyll A, B and carotenoids from which the concentrations were calculated. The results were expressed relative to the weight of the extract in wt%.

### In-situ (Trans-)esterification based treatment

Approximately 10 g of spent bleaching earth was added with 50 mL of solvent to a 100 mL high pressure reactor (Premex solutions gmbh). The reactor was closed and heated to the requested temperature for 30 min while stirring. After cooling down, the content of the reactor was filtrated over a vacuum filter and the solids were washed with the same solvent. The wash fraction was collected in a separate vial to avoid leakage of the treated spent sorbent in the collected supernatant. After treatment a clearly yellow colored liquid was visible.

### EXAMPLE 1 - OIL EXTRACTION FROM A NON-DRIED SORBENT VIA (TRANS-)ESTERIFICATION (Comparative example)

The present example exemplifies a method for the extraction of a residue comprising fatty acids and pigments from a spent bleaching earth which has been used in the refining of a vegetable oil. The present example is not in accordance with the present invention, as the spent bleaching earth is contacted with methanol without said spent bleaching earth having priorly subjected to a drying step. In the present example, two representative conditions were chosen to (trans-)esterify vegetable lipids. According to the present example, approximately 10 g of fresh bleaching earth was added with 50 mL of methanol to the reactor. The reactor was closed and heated to the requested temperature for 30 min. After cooling down, the content of the reactor was filtrated over a vacuum filter and the solids were washed with methanol. Differently as with the hydrothermal approach, the wash fraction was collected in a separate vial to avoid leakage of the treated spent catalyst in the collected supernatant. After treatment a clearly yellow colored liquid was removed with a "biodiesel" smell. The (trans-)esterification reaction was conducted at elevated pressure, above atmospheric pressure. In particular, the pressure of 50-55 bars at 230 °C, and at a pressure of 100-110 bars at 270 °C.

Table 1 here below illustrates the mass balance obtained after the above mentioned in situ (trans-)esterification. Table 1 shows that the mass balance gives a slight overestimation, however, within the error that can be expected from the work-up, analysis and possibly some small remaining inclusions of solvent in the collected and dried materials. The mass balance indicates the extraction of ~9% and 15% from the original ~35% organic matter present on dry matter base. This indicates that roughly 25% and 43% of the original organic material is extracted.

**Table 1: Mass balance obtained after the in-situ (trans-)esterification according to the present example. "Before extraction" denotes the weight before the (trans-)esterification step, wherein "After extraction" denotes the weight after the (trans-)esterification step, whereas "dm" stands for dry matter.**

| | Before extraction | After extraction | | Total |
|---|---|---|---|---|
| Temperature (°C) | Bleaching earth (g dm) | Bleaching earth (g dm) | Extract (g dm) | Mass balance (% dm) |
| 230 °C | 7.467 (100%) | 7.148 (95.7%) | 0.658 (8.8%) | 104.5% |
| 270 °C | 7.326 (100%) | 6.641 (90.6%) | 1.074 (14.7%) | 105.3% |

Further, table 2 here below, illustrates the overall composition of the spent bleaching earth after the same in-situ (trans-)esterification, wherein fresh bleaching earth has been used. Table 2 illustrates that the analysis of the extracted spent bleaching earth is in line with the observations based on the mass balance. When normalized against the ash content, the results confirm that the treatment during 30 minutes at 230 °C and 270 °C, is able to remove roughly ¼ and ½ respectively of the original organic material present on the spent bleaching earth.

**Table 2: Overall composition of the spent bleaching earth after in-situ (trans-)esterification. OM stands for Organic Matter, wherein Ash stands for Inorganic matter, and whereas "initial" represents the material before the treatment, used as reference.**

| | Moisture (wt.%) | OM (wt.%) | Ash (wt.%) | OM/ash (loss%) |
|---|---|---|---|---|
| Initial | | | | 0,536 |
| 230 °C | 42,8 | 16,2 | 41,0 | 0,395 (26%) |
| 270 °C | 43,7 | 11,7 | 44,6 | 0,262 (51 %) |

Further data is provided in Table 3. Table 3 illustrates the composition of the extracts and indicates that the extracts are rich in fatty acid-based compounds. In particular, the FAME represents the content of methyl esters in the extract as such and indicates how well the transesterification reaction has taken place, whereas the total FAME corresponds to the amount of all glycerides and fatty acids in the extract after they have been converted to esters. The total FAME therefore represents the total amount present in the extract, and hence the max yield that could be reached by conducting the in-situ transesterification. In case of 270 °C the majority of the compounds is already present as methyl ester confirming indeed that it is possible to have an in-situ (trans-)esterification under the conditions applied.

**Table 3: Composition of the dried extracts obtained after performing (trans-)esterification on fresh bleaching earth.**

| Solvent | Weight (wt.% on initial) | FAME (wt.% on dry extract) | Total FAME (wt.% on dry extract) | Carotenoids (mg/g dry extract) | Chlorophyll (mg/g dry extract) |
|---|---|---|---|---|---|
| 230 °C | 6,4 | 15,8 | 72,5 | 0,140 | 0,094 |
| 270 °C | 10,7 | 49,1 | 77,4 | 0,045 | 0,025 |

### EXAMPLE 2 - OIL EXTRACTION FROM A DRIED SORBENT VIA (TRANS-)ESTERIFICATION (present invention)

The present example exemplifies a method according to the present invention for the extraction of a residue comprising fatty acids and pigments from a spent bleaching earth which has been used in the refining of a vegetable oil. The present example comprises an extraction methodology similar to the one exemplified in EXAMPLE 1, with the difference that method was applied on bleaching earth which was subjected on dried spent bleaching earth. Therefore, in the present example, the spent bleaching earth was provided in a dried state. To obtain dried spent bleaching earth, fresh bleaching earth was heat dried at a temperature of 105 °C.

The dried spent bleaching earth was (trans-)esterified with two different solvent, methanol and ethanol. The lowest temperature for the (trans-)esterification reaction was 230 °C, and a pressure of the pressure of 50-55 bars. For the rest, the overall methodology was the same in terms of conditions to allow a good comparison.

In a first step, methanol was added in the same S/L ratio as in EXAMPLE 1 experiments (10 g and 50 mL methanol), the reaction was performed at 230 °C, for 30 minutes, cooled down, the liquid, which consisted mostly of the alcohol, was removed. In case a 2-step approach is taken, and hence the sorbent is subjected to the (trans-)esterification twice, fresh alcohol was added to the sorbent after the first step, to achieve the same S/L ratio. The reaction was then repeated, and after cooling down, the liquid, which consisted mostly of the alcohol, was separated from the residual bleaching earth.

In the present example, the procedure wherein the alcohol is methanol has been repeated for another alcohol, ethanol. In addition, also the influence of a second treatment on treated spent bleaching earth was also explored. On this, in particular see in Table 4 reference to step 1, and step 2, wherein step 1 indicates that a single (trans-)esterification step was performed, whereas step 2 indicates after a first in-situ (trans-)esterification step, the recovered sorbent is further subjected to a second (trans-)esterification step. In other words, in a "2 step" approach, the obtained bleaching earth containing a reduced fat/oil content is further (trans-)esterified in accordance with the method of the present invention.

Table 4, here below, illustrates the obtained mass balance obtained after conducting the method of the invention, with methanol and ethanol respectively. The mass balance closes very well. Table 4 further shows that significant amounts of extract are recovered. In particular, the two steps roughly 28% of the initial material, of which ~80 % is recovered in the first step of the procedure. Considering that the initial dried raw material only contains ~35% organic matter, it is indicative of an efficient process.

**Table 4: Mass balance obtained after a 2-step in-situ (trans-)esterification on dry material. "Before extraction" denotes the weight before the (trans-)esterification step, wherein "After extraction" denotes the weight after the (trans-)esterification step, whereas "dm" stands for dry matter.**

| | | Before extraction | After extraction | | Total |
|---|---|---|---|---|---|
| Alcohol | Step | Bleaching earth (g dm) | Bleaching earth (g dm) | Extract (g dm) | Mass balance (% dm) |
| MeOH | Step 1 | 10,38 (100%) | | 2,2932 (22,1%) | 100,8% |
| | Step 2 | | 7,5913 (73.1 %) | 0,5787 (5,6%) | |
| EtOH | Step 1 | 10,06 (100%) | | 2,2515 (22,4%) | 100,8% |
| | Step 2 | | 7,3830 (73,4 %) | 0,51 (5,1%) | |

Table 5 here below illustrates the analysis of the treated spent bleach earth, which confirms the efficiency of the method of the present invention. After the two-step procedure, wherein the dried spent bleaching earth is treated twice, ~75% of the organic matter is removed, both in the case of methanol as well as ethanol.

**Table 5: Overall composition of the spent bleaching earth after 2-step in-situ (trans-)esterification. OM stands for Organic Matter, wherein Ash stands for Inorganic matter and whereas "initial" represents the material before the treatment, used as reference.**

| | Mass loss (%) | Moisture (%) | OM (%) | Ash (%) | OM/ash (loss %) |
|---|---|---|---|---|---|
| Initial | | | | | 0,536 (ref) |
| Methanol | 24,3% | 1,55 | 11,5 | 87,0 | 0,132 (75,4 %) |
| Ethanol | 26,6 % | 0,75 | 11,6 | 87,7 | 0,132 (75,4 %) |

Table 6 shows the detailed analysis of the extracts, and that the extracts obtained using methanol as alcohol are almost entirely composed out of fatty acid based compounds. Roughly 80-85% of these compounds are already present as methyl ester, suggestive of an efficient in-situ (trans-)esterification. As in the case of ethanol, ethyl-esters are expected to be formed, these samples were not analyzed. The process also co-extracts carotenoids and chlorophyll.

**Table 6: Composition of the dried extracts obtained after a 2-step in-situ (trans-)esterification.**

| Solvent | Weight (wt.% on initial) | FAME (wt.% on dry extract) | Total FAME (wt.% on dry extract) | Carotenoids (mg/g dry extract) | Chlorophyll A+B (mg/g dry extract) |
|---|---|---|---|---|---|
| MeOH step1 | 22,1 | 79,4 | 104,3 | 0,333 | 0,229 |
| MeOH step2 | 5,6 | 85,0 | 90,7 | 0,280 | 0,203 |
| EtOH step 1 | 22,4 | NA | NA | 0,293 | 0,212 |
| EtOH step 2 | 5,1 | NA | NA | 0,309 | 0,208 |

The data above show in particular that by means of the method according to the present invention, at the same extraction conditions, when the (trans-)esterification step is accomplished on a dried spent sorbent, the wt. % in the dried extracts of fatty acid methyl ester is remarkably improved. In particular, at a temperature of 230 °C at elevated pressure, above atmospheric pressure, and using methanol as a solvent, the FAME and total FAME of the dried extracts obtained from non-dried bleaching earth has been found to be 15,8 wt. % and 72,5 wt. % respectively, whereas in the same conditions, but with dried bleaching earth, the FAME and total FAME of the dried extracts obtained has been found to be 79,4 wt. % and 104,3 wt. % respectively. Further, by performing the (trans-)esterification with methanol on dried bleaching earth, it has been possible to improve the extraction of carotenoids and chlorophyll. Table 6 also illustrates that the FAME of the dried extracts after the second extraction step substantially increased, from 79,4% (step 1) to 85,0% (step 2), thereby showing the benefits of an embodiment of the present invention, comprising further (trans-)esterifying the bleaching earth a second time in accordance with the method of the present invention.

Therefore, by means of the method according to the present invention it is possible to provide a more efficient extraction of fat, oil and other residues from sorbents, in particular bleaching earths.

## Claims

1. A method for reducing the amount of a residue which is entrapped in a spent sorbent, comprising the steps of:
a) drying a spent sorbent comprising the residue, thereby obtaining a dried spent sorbent;
b) subjecting the residue entrapped in the dried spent sorbent obtained from step a) to a (trans-)esterification reaction by contacting the dried spent sorbent with at least one alcohol, thereby obtaining one or more esters from said residue;
c) removing the one or more esters obtained at step c) from the sorbent, thereby obtaining a sorbent having a reduced amount of the residue.

2. The method according to claim 1, wherein at step a) the spent sorbent is dried at a temperature from 50°C to 150°C.

3. The method according to claim 2, wherein at step a) the spent sorbent is dried at a temperature from 80°C to 120°C.

4. The method according to any one of the previous claims, wherein the method further comprises:
d) subjecting the sorbent having a reduced amount of the residue obtained at step c) to a further (trans-)esterification step b) as defined in claim 1.

5. The method according to claim 4, wherein step d) further comprises drying the sorbent prior to subjecting the sorbent to the further (trans-)esterification step b).

6. The method according to any one of the previous claims, wherein the alcohol used in step b) comprises one or more alcohols selected from the list of methanol, ethanol, propanol, butanol.

7. The method according to claim 6, wherein the alcohol is methanol.

8. The method according to any one of the previous claims, wherein the residue entrapped in the spent sorbent is a fat residue or an oil residue.

9. The method according to any one of the previous claims, wherein the spent sorbent is a spent bleaching earth.

10. The method according to any one of the previous claims, wherein step b) is conducted at a temperature greater than 200°C.

11. The method according to claim 10, wherein step b) is conducted at a temperature from 200°C to 300°C.

12. The method according to any one of the previous claims, wherein step b) is performed at elevated pressure, above atmospheric pressure.

13. The method according to any one of the previous claims, wherein step b) is conducted with a reaction mixture consisting of the alcohol and the dried spent sorbent obtained at step a).

14. The method according to any one of the previous claims, wherein at step b) the dried sorbent and the alcohol are provided in a solid to liquid ratio expressed in g/ml of from 0.01 to 10, preferably from 0.02 to 5, more preferably from 0.025 to 4.

15. A sorbent obtained by the method according to any one of claims 1 to 14.
